# EUROPÄISCHE PATENTSCHRIFT

(11) **EP 0 819 075 B1**
(45) Veröffentlichungstag und Bekanntmachung des Hinweises auf die Patenterteilung: **16.05.2001**
(21) Anmeldenummer: 96934579.2
(22) Anmeldetag: 09.10.1996
(51) Int. Cl.: B60T 8/42, B60T 8/40

(54) **VERFAHREN ZUM BETRIEB EINER HYDRAULISCHEN BREMSANLAGE**
PROCESS FOR OPERATING A HYDRAULIC BRAKING SYSTEM
PROCEDE PERMETTANT DE FAIRE FONCTIONNER UN SYSTEME DE FREINAGE HYDRAULIQUE

(30) Priorität: 12.10.1995 DE 19537927
(43) Veröffentlichungstag der Anmeldung: 21.01.1998
(73) Patentinhaber: Continental Teves AG & Co. oHG, 60488 Frankfurt (DE)
(72) Erfinder: VAN MEEL, Franciscus, D-85113 Böhmfeld (DE); GRÄBER, Johannes, D-65760 Eschborn (DE); ROMANO, Nino, D-60389 Frankfurt am Main (DE)
(86) Internationale Anmeldenummer: EP9604365
(87) Internationale Veröffentlichungsnummer: WO9713669

(56) Entgegenhaltungen:
- WO-A-93/09010
- DE-A- 3 836 082
- DE-A- 4 333 568

## Beschreibung

Die vorliegende Erfindung betrifft ein Verfahren zum Betrieb einer hydraulischen Bremsanlage gemäß dem Oberbegriff des Anspruchs 1.

Eine Bremsanlage, für welche dieses Verfahren geeignet ist, ist beispielsweise in der DE 43 33 568 A1 beschrieben. Die bekannte Bremsanlage ist ausgestattet zur Bremsschlupfregelung nach dem Rückförderprinzip, zur Antriebsschlupfregelung an den Radbremsen der angetriebenen Räder sowie zur Giermomentregelung beim Durchfahren einer Kurve. Antriebsschlupfregelung und Giermomentregelung fallen unter den Begriff Aktivbremsung, da derartige Bremseneingriffe auch ohne Betätigung des Bremspedals erfolgen können. Jeder Bremskreis der Bremsanlage weist einen Rückförderkreislauf auf, wobei die Rückförderpumpe selbstansaugend ist und mit einer Saugleitung zur Bremsleitung versehen ist, wobei in die Saugleitung ein elektromagnetisch betätigtes Umschaltventil eingefügt ist. Die Rückförderpumpe besitzt eine Druckleitung zur Bremsleitung, wobei die Druckleitung in die Bremsleitung zwischen dem Anschluß der Saugleitung und den Einlaßventilen zu den Radbremsen einmündet. In der Bremsleitung ist zwischen dem Anschluß der Saugleitung und dem Anschluß der Druckleitung der Rückförderpumpe ein Trennventil angelegt, welches während einer Aktivbremsung geschlossen wird, um ein Rückströmen des geförderten Druckmittels zum Hauptzylinder zu verhindern. Zum schnellen Druckaufbau weist die bekannte Bremsanlage an der Druckseite der Rückförderpumpe einen Hochdruckspeicher auf, der über ein 2/2-Wegemagnetventil an die Bremsleitung anschließbar ist. Die Rückförderpumpe saugt zur Bremsschlupfregelung aus dem an die Auslaßventile der Radbremsen angeschlossenen Niederdruckspeicher Druckmittel an. Sie fördert das angesaugte Volumen in die Bremsleitung, wo es vor den Einlaßventilen der Radbremsen ansteht. Wenn zur Aktivbremsung das im Hochdruckspeicher und im Niederdruckspeicher vorhandene Druckmittel nicht ausreicht, so öffnet das Umschaltventil in der Saugleitung, so daß die Rückförderpumpe bei unbetätigtem Bremspedal durch den Hauptzylinder hindurch aus dem Vorratsbehälter ansaugen kann.

Es gibt Vorschläge, ein Reservevolumen im Bremskreis anzulegen, welches bei betätigtem Bremspedal für einen zusätzlichen Druckaufbau der Saugseite der Rückförderpumpe zur Verfügung gestellt werden kann.

Die Auswahl der betroffenen Radbremsen erfolgt jeweils nach den zugrundeliegenden Regelstrategien. Bei der Antriebsschlupfregelung wird ein Bremseneingriff am durchdrehenden angetriebenen Rad vorgenommen, während zur Giermomentregelung bei untersteuerndem Fahrverhalten das kurveninnere Hinterrad und bei übersteuerndem Fahrverhalten das kurvenäußere Vorderrad gebremst wird.

Die Aufgabe der vorliegenden Erfindung besteht darin, mit einfachen Maßnahmen die Effektivität der Bremsanlage während einer Aktivbremsung zu verbessern.

Diese Aufgabe wird gelöst in Verbindung mit den kennzeichnenden Merkmalen des Anspruchs 1. Das Prinzip der Erfindung besteht also darin, immer dann, wenn nur in einem Bremskreis eine Aktivbremsung erforderlich ist, die zweite Pumpe lastfrei arbeiten zu lassen. Hierdurch verbessert sich das Förderverhalten der im aktiv zu bremsenden Bremskreis laufenden Rückförderpumpe. Das Förderverhalten der zur Aktivbremsung herangezogenen Rückförderpumpe wird also nicht dadurch behindert, daß die andere Pumpe gegen einen hohen Druck fördern muß. Eine Aktivbremsung in nur einem Bremskreis liegt während einer Giermomentregelung immer vor und während einer Antriebsschlupfregelung dann, wenn die Bremsanlage eine Vorderachs-Hinterachs-Bremskreisaufteilung aufweist.

Durch das geöffnete Trennventil im nicht aktiv gebremsten Bremskreis kann zudem der Fahrer des Fahrzeugs bei Betätigung des Bremspedals in diesen Bremskreis direkt einbremsen, ohne daß ein Hauptzylinderbremsdruck einem Pumpenförderdruck überlagert werden muß.

Durch diese Möglichkeit der direkten Einbremsung in einen Bremskreis kann eine redundante Drucksensierung unterhalb des Hauptzylinders an beiden Bremskreisen durch eine einfache Drucksensierung ersetzt werden. Es muß jeweils nur in dem Bremskreis der Druck überwacht werden, in welchem das Trennventil geschlossen ist, also im aktiv gebremsten Bremskreis. Statt einer Drucksensierung im nicht aktiven Bremskreis kann aus dem Schlupf der direkt vom Fahrer gebremsten Räder ein Druckwert errechnet werden, wie es ähnlich schon bei Antriebsschlupfregel-system erfolgt, um das Signal des am Bremspedal befindlichen Bremslichtschalters zu ersetzen.

Eine nähere Erläuterung des Erfindungsgedankens erfolgt nun anhand der Beschreibung einer Zeichnung.

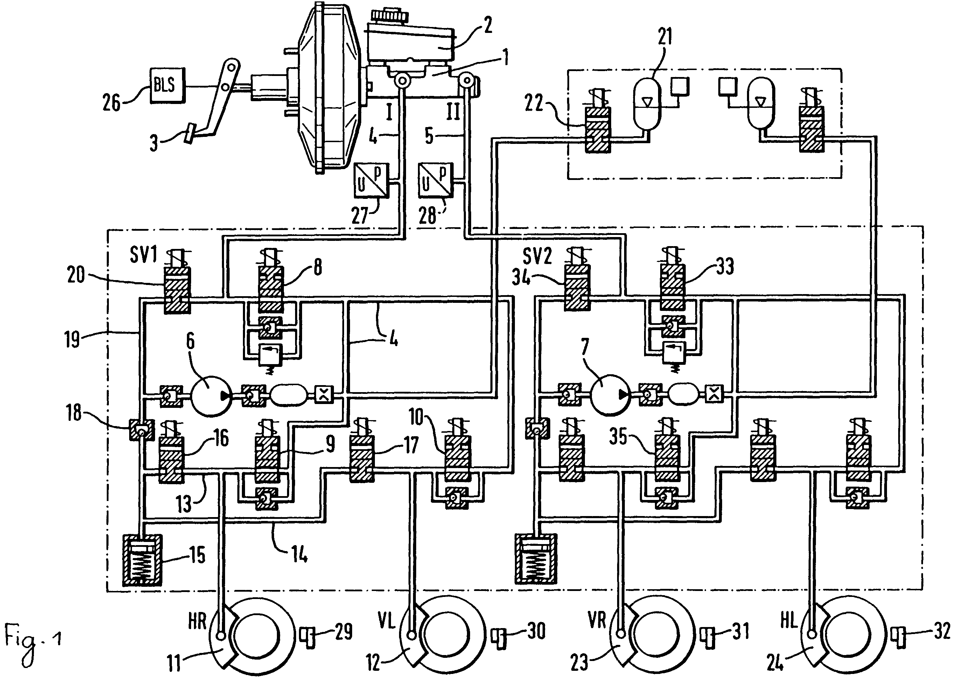

Die einzige Figur zeigt eine Bremsanlage, bei welcher das erfindungsgemäße Verfahren verwirklicht werden kann.

Die Bremsanlage besitzt einen Hauptzylinder 1, der an einen Vorratsbehälter 2 angeschlossen ist und von einem Bremspedal 3 betätigbar ist. Vom Hauptzylinder 1 gehen zwei Bremsleitungen 4 und 5 aus, welche jeweils einen Bremskreis I bzw. II versorgen. Jede Bremsleitung 4 und 5 weist unterhalb des Hauptzylinders 1 einen Drucksensor 27 bzw. 28 auf, die dazu dienen, einen Fahrerbremswunsch zu detektieren. Der Bremslichtschalter 26 am Bremspedal 3 kann nur Auskunft darüber geben, ob mit dem Bremspedal 3 gebremst wird, nicht aber über die Stärke der Bremsung. Die beiden Bremskreise I und II sind identisch aufgebaut. Ihre beiden Rückförderpumpen 6 und 7 weisen einen gemeinsamen Antriebsmotor auf.

Die nun folgende Beschreibung des Bremskreises I trifft ebenso auf den Bremskreis II zu. Die Bremsleitung 4 verläuft über ein Trennventil 8 zu den Einlaßventilen 9 und 10 der Radbremsen 11 und 12. Von den Radbremsen 11 und 12 führen Rücklaufleitungen 13 und 14 zu einem Niederdruckspeicher 15. In den Rücklaufleitungen 13 und 14 befinden sich Auslaßventile 16 und 17. Einlaßventile 9,10 und Auslaßventile 16,17 sind elektromagnetisch betätigbare 2/2-Wegeventile. Während die Einlaßventile stromlos offen sind, sind die Auslaßventile stromlos geschlossen. Der Niederdruckspeicher 15 ist über ein Rückschlagventil 18 mit der Saugseite der Rückförderpumpe 6 verbunden, welche mit ihrer Druckseite an die Bremsleitung 4 zwischen dem Trennventil 8 einerseits und den Einlaßventilen 9 und 10 andererseits anschließt. Die Rückförderpumpe 6 ist selbst-ansaugend und besitzt eine Saugleitung 19 zur Bremsleitung 4 zwischen Hauptzylinder 1 und Trennventil 8. In die Saug-leitung 19 ist ein elektromagnetisch betätigtes Umschalt-ventil 20 eingefügt. Es ist stromlos geschlossen und wird zu einer Aktivbremsung geöffnet, wenn die Rückförderpumpe 6 Druckmittel über die Bremsleitung 4 und den Hauptzylin-der 1 aus dem Vorratsbehälter 2 ansaugen muß.

Um einen schnellen Bremseneingriff bei einer Aktivbremsung zu ermöglichen, kann an die Bremsleitung 4 in Höhe der Einmündung der Druckseite der Rückförderpumpe 6 ein Hochdruckspeicher 21 angeschlossen sein, welcher mit einem Speicherventil 22 mit der Bremsleitung 4 verbindbar ist. Zum Laden des Hochdruckspeichers 21 wird das Speicher-ventil 22 geöffnet, so daß die Rückförderpumpe 6 über das dann geöffnete Umschaltventil 20 Druckmittel ansaugen kann und in den Speicher verbringen kann. Die Einlaßventile 9 und 10 sowie das Trennventil 8 sind dabei geschlossen. Hochdruckspeicher sind jedoch nur eine Möglichkeit, einen schnellen Bremseneingriff zu ermöglichen. Die Erfindung ist auf eine derartige Variante einer Bremsanlage nicht beschränkt.

Jede der Radbremsen 11,12,23 und 24 weist einen Drehzahlmesser 29,30,31,32 auf. Diese Drehzahlmesser dienen der Geschwindigkeitserfassung, also zur Bestimmung einer Fahrzeugreferenzgeschwindigkeit, und zur Schlupferkennung. Ein übermäßiger Schlupf an einem Rad liegt vor, wenn sich dieses Rad entweder erheblich schneller oder erheblich langsamer dreht als die übrigen Räder. Dreht sich das Rad schneller und handelt es sich um ein angetriebenes Rad, so liegt übermäßiger Antriebs-schlupf vor, während bei blockierendem Rad ein übermäßiger Bremsschlupf vorliegt.

Zur Erklärung der Erfindung sei einmal angenommen, es bestehe eine diagonale Bremskreisaufteilung, wobei an den Bremskreis I die Radbremsen des rechten Hinterrades und des linken Vorderrades angeschlossen seien, während der Brems-kreis II die Radbremsen des rechten Vorderrades und des linken Hinterrades versorge. Des weiteren sei angenommen, daß sich das Fahrzeug in einer Linkskurve befinde und zu einem untersteuernden Verhalten neige. Das bedeutet, daß das Fahrzeug ohne aktiven Bremseneingriff aus der Kurve herausgetragen würde. In diesem Fall ist ein zusätzliches Giermoment aufzubringen, welches das Fahrzeug in der vorgeschriebenen Spur hält.

Um ein Giermoment gegen den Uhrzeigersinn aufzubringen, um das Fahrzeug in der gewünschten Fahrtrichtung zu halten, wird daher ein aktiver Bremseneingriff im linken Hinterrad vorgenommen. Das bedeutet, daß die Radbremse 24 einer Aktivbremsung unterzogen wird. Die Rückförderpumpen 6 und 7 werden durch den gemeinsamen Motor gestartet und fördern Druckmittel. Im Bremskreis I bleibt das Trennventil 8 geöffnet und das Umschaltventil 20 wird in seine Offenstellung umgeschaltet. Die Rückförderpumpe 6 fördert nun Druckmittel im Kreis. Das Druckmittel, das an ihrer Druckseite austritt, wandert über das Trennventil 8 und das Umschaltventil 20 wieder zur Saugseite der Rückförderpumpe 6 zurück, da sie hier ansaugt. Im Bremskreis II wird das zugehörige Trennventil 33 geschlossen, während das Umschaltventil 34 geöffnet wird. Die Rückförderpumpe 7 ist somit in der Lage, unterhalb des Trennventils 33 im Brems-kreis II Druck aufzubauen. Da nur die Radbremse 24 des zugeordneten Hinterrades mit Bremsdruck beaufschlagt werden soll, wird das Einlaßventil 35 zur Radbremse 23 des rechten Vorderrades geschlossen.Alternativ kann das Umschaltventil 20 auch geschlossen bleiben. In diesem Fall fördert die Pumpe kein Volumen und läuft somit auch lastfrei. Dadurch ist die Förderleistung der Rückförderpumpe 7 im aktiv zu bremsenden Bremskreis II vergleichsweise verbessert.

Da das Trennventil 8 des Bremskreises I geöffnet ist, müssen die Einlaßventil 9 und 10 im Bremskreis I nicht geschlossen werden, um den Förderdruck der Rückförderpumpe 6 von den Radbremsen 11 und 12 fernzuhalten. Ein Druck wird ja durch die Rückförderpumpe 6 erst gar nicht aufgebaut. Erst ein zusätzlich durch Betätigung des Bremspedals 3 in den Bremskreis I eingespeister Hauptzylinderdruck ist in der Lage, in den Radbremsen 11 und 12 einen Bremsdruck aufzubauen.

Sobald eine Pedalbetätigung sensiert wird - dazu reicht der Bremslichtschalter 26 aus - wird das Umschaltventil 20 in seine dargestellte geschlossene Grundposition gebracht, so daß in den Radbremsen 11 und 12 normal gebremst werden kann. Eine Drucksensierung ist also nur in einem Bremskreis notwendig.

Damit trotz der Auswertung des Signals nur eines Drucksensors nämlich des Drucksensors 28 des Bremskreises II trotzdem eine redundante Absicherung vorliegt, falls dieser Drucksensor defekt sein sollte, wird zur Über-wachung der Schlupf des linken Vorderrades und des rechten Hinterrades ausgewertet. Diesen Rädern sind die Radbremsen 11 und 12 zugeordnet, welche sich im vom Fahrer gebremsten Bremskreis I befinden. Aus dem Schlupf an diesen Rädern läßt sich ein Druckwert berechnen.

Wenn eine Aktivbremsung an einem anderen Rad vorgenommen wird, so wird entsprechend verfahren, wobei jeweils die Rückförderpumpe des anderen Bremskreises lastfrei arbeitet.

## Patentansprüche

1. Verfahren zum Betrieb einer hydraulischen Bremsanlage mit einem pedalbetätigten Hauptzylinder (1), der an einen Vorratsbehälter (2) angeschlossen ist und von dem zwei Bremskreise (I,II) ausgehen, wobei jeder Bremskreis umfaßt:
- eine Bremsleitung (4) zu mindestens einer Radbremse (11),
- eine Rücklaufleitung (13) von der Radbremse (12) zu einem Niederdruckspeicher (15),
- eine selbstansaugende Rückförderpumpe (6), deren Druckseite über eine Druckleitung an die Bremsleitung (4) angeschlossen ist und deren Saugseite über eine erste Saugleitung an den Niederdruckspeicher (15) und über eine zweite Saugleitung (19) an die Bremsleitung (4) zwischen Hauptzylinder (1) und Anschluß der Druckleitung angeschlossen ist,
- ein Trennventil (8) in der Bremsleitung (4) zwischen den Anschlüssen der zweiten Saugleitung (19) und der Druckleitung,
- ein Einlaßventil (9) in der Bremsleitung (4) zwischen Anschluß der Druckleitung und der Radbremse (11),
- ein Auslaßventil (16) in der Rücklaufleitung (13),
- ein Umschaltventil (20) in der zweiten Saugleitung (19),
wobei zur Aktivbremsung die Rückförderpumpe (6,7) jeweils des Bremskreises I,II, dessen Radbremse bzw. Bremsen (11,12,23,24) zu betätigen sind, zumindest bei leerem Niederdruckspeicher (15) und unbetätigtem Bremspedal (3) Druckmittel über die zweite Saugleitung (19) ansaugt und in die Bremsleitung (4,5) fördert und wobei beide Rückförderpumpen (6,7) von demselben Motor angetrieben werden,
dadurch **gekennzeichnet,** daß dann, wenn nur in einem Bremskreis (II) eine Aktivbremsung vorzunehmen ist, das Trennventil (8) des anderen Bremskreises (I) geöffnet wird und die Rückförderpumpe (6) dieses anderen Bremskreises (I) lastfrei arbeitet.

2. Verfahren nach Anspruch 1, dadurch gekennzeichnet, daß auch das Umschaltventil (20) des nicht aktiv zu bremsenden Bremskreises (I) geöffnet wird.

3. Verfahren nach Anspruch 1, dadurch gekennzeichnet, daß das Umschaltventil (20) des nicht aktiv zu bremsenden Bremskreises (I) geschlossen wird oder bleibt.

4. Verfahren nach einem der vorhergehenden Ansprüche, wobei in jeder Bremsleitung (4,5) zwischen Hauptzylinder (1) und Trennventil (8,33) ein Drucksensor (27,28) zur Erkennung einer pedalbetätigten Bremsung vorhanden ist, dadurch **gekennzeichnet,** daß nur das Signal des dem aktiv gebremsten Bremskreis (II) zugeordneten Drucksensors (28) ausgewertet wird.

5. Verfahren nach Anspruch 4, dadurch **gekennzeichnet,** daß eine Überwachung dieses Sensorsignals durch Schlupfberechnungen der dem anderen Bremskreis I zugeordneten Räder erfolgt.

## Claims

1. Method of operating a hydraulic brake system with a pedal-operated master cylinder (1) which is connected to a supply reservoir (2) and from which two brake circuits (I, II) extend, each brake circuit comprising the following elements:
- a brake line (4) leading to at least one wheel brake (11),
- a return line (13) extending from the wheel brake (12) to a low-pressure accumulator (15),
- a self-priming return pump (6) having a pressure side that is connected to the brake line (4) by way of a pressure line and having a suction side that is connected to the low-pressure accumulator (15) by way of a first suction line and to the brake line (4) between the master cylinder (1) and the port of the pressure line by way of a second suction line (19),
- a separating valve (8) in the brake line (4) between the ports of the second suction line (19) and the pressure line,
- an inlet valve (9) in the brake line (4) between the port of the pressure line and the wheel brake (11),
- an outlet valve (16) in the return line (13),
- a change-over valve (20) in the second suction line (19),
wherein for active braking operations, the return pump (6, 7) of respectively that brake circuit (I, II) whose wheel brake or brakes (11, 12, 23, 24) shall be operated aspirates pressure fluid by way of the second suction line (19) and supplies it into the brake line (4, 5) at least when the low-pressure accumulator (15) is empty and the brake pedal (3) is not applied, and wherein both return pumps (6, 7) are driven by the same motor,
**characterized** in that in the event of need of an active braking only in one brake circuit (II), the separating valve (8) of the other brake circuit (I) will be opened and the return pump (6) of this other brake circuit (I) operates in a non-load manner.

2. Method as claimed in claim 1,
**characterized** in that also the change-over valve (20) of the brake circuit (I) which shall not be braked actively will be opened.

3. Method as claimed in claim 1,
**characterized** in that the change-over valve (20) of the brake circuit (I) which shall not be braked actively will be closed or remains closed.

4. Method as claimed in any one of the preceding claims, wherein one pressure sensor (27, 28) for detecting pedal-operated braking is interposed in each brake line (4, 5) between the master cylinder (1) and the separating valve (8, 33),
**characterized** in that only the signal of the pressure sensor (28) which is associated with the actively braked brake circuit (II) is evaluated.

5. Method as claimed in claim 4,
**characterized** in that this sensor signal is monitored by slip calculations of the wheels associated with the other brake circuit (I).

## Revendications

1. Procédé d'utilisation d'un système de freinage hydraulique comprenant un maître-cylindre (1) commandé par pédale, relié à un réservoir (2), et à partir duquel s'étendent deux circuits de freinage (I, II), chacun des circuits de freinage comportant:
- une conduite de frein (4) rejoignant au moins un frein de roue (11),
- une conduite de retour (13) s'étendant du frein de roue (12) à un accumulateur basse pression (15),
- une pompe de renvoi autoamorçante (6) dont le côté refoulement est relié à la conduite de frein (4) par l'intermédiaire d'une conduite de pression, et dont le côté aspiration est relié à l'accumulateur basse pression (15) par l'intermédiaire d'une première conduite d'aspiration, et à la conduite de frein (4) par l'intermédiaire d'une seconde conduite d'aspiration (19), entre le maître-cylindre (1) et le raccordement de la conduite de pression,
- une vanne d'isolement (8) disposée dans la conduite de frein (4), entre les raccordements de la seconde conduite d'aspiration (19) et de la conduite de pression,
- une vanne d'admission (9) disposée dans la conduite de frein (4), entre le raccordement de la conduite de pression et le frein de roue (11),
- une vanne d'échappement (16) disposée dans la conduite de retour (13),
- une vanne de commutation (20) disposée dans la seconde conduite d'aspiration (19),
la pompe de renvoi (6, 7) du circuit de freinage respectif I, II, dont le frein de roue ou les freins de roues (11, 12, 23, 24) doivent être actionnés, lors d'un freinage actif, aspirant du fluide de pression dans la seconde conduite d'aspiration (19) et le refoulant dans la conduite de frein (4, 5), du moins lorsque l'accumulateur basse pression (15) est vide et lorsque la pédale de frein (3) n'est pas actionnée, et les deux pompes de renvoi (6, 7) étant mues par le même moteur,
caractérisé en ce que
lorsqu'un freinage actif ne doit être effectué que dans l'un (II) des circuits de freinage, la vanne d'isolement (8) de l'autre circuit de freinage (I) est ouverte, et en ce que la pompe de renvoi (6) de cet autre circuit de freinage (I) travaille alors sans charge.

2. Procédé selon la revendication 1, caractérisé en ce que la vanne de commutation (20) du circuit de freinage (I) qui n'effectue pas un freinage actif est également ouverte.

3. Procédé selon la revendication 1, caractérisé en ce que la vanne de commutation (20) du circuit de freinage (I) qui n'effectue pas un freinage actif est ou reste fermée.

4. Procédé selon l'une des revendications précédentes, où dans chaque conduite de frein (4, 5), un capteur de pression (27, 28) destiné à détecter un freinage déclenché par l'actionnement de la pédale est prévu entre le maître-cylindre (1) et la vanne d'isolement (8, 33),
caractérisé en ce que seul le signal du capteur de pression (28), qui est associé au circuit de freinage (II) effectuant un freinage actif, est analysé.

5. Procédé selon la revendication 4, caractérisé en ce qu'une surveillance de ce signal de capteur est réalisée par l'intermédiaire de calculs de glissement des roues associées à l'autre circuit de freinage I.
